# EUROPÄISCHE PATENTSCHRIFT

(11) **EP 3 160 785 B1**
(45) Veröffentlichungstag und Bekanntmachung des Hinweises auf die Patenterteilung: **02.01.2019**
(21) Anmeldenummer: 15731517.7
(22) Anmeldetag: 22.06.2015
(51) Int. Cl.: B60K 6/48, B60W 10/02, B60W 10/08, B60W 10/11, B60W 20/00, B60W 50/02, B60L 3/00, H02P 29/02

(54) **VERFAHREN ZUM BETREIBEN EINER ANTRIEBSEINRICHTUNG EINES KRAFTFAHRZEUGS SOWIE ENTSPRECHENDE ANTRIEBSEINRICHTUNG**
METHOD FOR OPERATING A DRIVE DEVICE OF A MOTOR VEHICLE, AND CORRESPONDING DRIVE DEVICE
PROCÉDÉ POUR FAIRE FONCTIONNER UN DISPOSITIF D'ENTRAÎNEMENT D'UN VÉHICULE À MOTEUR ET DISPOSITIF D'ENTRAÎNEMENT CORRESPONDANT

(30) Priorität: 28.06.2014 DE 102014009715
(43) Veröffentlichungstag der Anmeldung: 03.05.2017
(73) Patentinhaber: Audi AG, 85045 Ingolstadt (DE)
(72) Erfinder: FELDMANN, Uwe, 85128 Nassenfels (DE)
(74) Vertreter: Askaryar, Jama
(86) Internationale Anmeldenummer: PCT/EP2015/001254
(87) Internationale Veröffentlichungsnummer: WO 2015/197183

(56) Entgegenhaltungen:
- DE-A1-102011 003 758
- DE-A1-102011 089 101
- DE-T5-112011 104 614

## Beschreibung

Die Erfindung betrifft ein Verfahren zum Betreiben einer Antriebseinrichtung eines Kraftfahrzeugs, die wenigstens eine elektrische Maschine mit einem Phasenwinkelgeber sowie eine mit der elektrischen Maschine wirkverbindbare Abtriebswelle aufweist. Die Erfindung betrifft weiterhin eine Antriebseinrichtung.

Das Verfahren dient dem Betreiben der Antriebseinrichtung des Kraftfahrzeugs. Dabei stellt die Antriebseinrichtung beispielsweise ein Drehmoment bereit, welches auf ein Antreiben des Kraftfahrzeugs, insbesondere auf ein Beschleunigen oder Verzögern des Kraftfahrzeugs, gerichtet ist. Die Antriebseinrichtung verfügt über die elektrische Maschine. Dabei kann es vorgesehen sein, dass die Antriebseinrichtung lediglich die elektrische Maschine aufweist und insoweit als Elektroantriebseinrichtung ausgebildet ist. Alternativ kann selbstverständlich die Antriebseinrichtung neben der elektrischen Maschine zumindest ein weiteres Antriebsaggregat aufweisen, insbesondere eine Brennkraftmaschine. In diesem Fall ist die Antriebseinrichtung als Hybridantriebseinrichtung ausgestaltet. Die Abtriebswelle ist mit der elektrischen Maschine wirkverbindbar. Beispielsweise ist die Abtriebswelle permanent mit wenigstens einer Achse beziehungsweise wenigstens einem Rad der Achse des Kraftfahrzeugs wirkverbunden. Beispielsweise ist die Wirkverbindung zwischen der elektrischen Maschine und der Abtriebswelle über wenigstens ein Schaltgetriebe und/oder eine Schaltkupplung hergestellt.

Der Phasenwinkelgeber dient zum Bestimmen einer Phasenlage beziehungsweise einer Drehwinkelposition der elektrischen Maschine, insbesondere eines Rotors und/oder einer Motorwelle der elektrischen Maschine. Der Phasenwinkel kann beispielsweise zur Ansteuerung der elektrischen Maschine, insbesondere zu ihrer Kommutierung, herangezogen werden. Der Phasenwinkelgeber kann auch als Drehgeber beziehungsweise Drehwinkelgeber bezeichnet werden. Insbesondere ist er als Winkellagegeber ausgestaltet, vorzugsweise als Inkrementaldrehgeber oder Absolutwertdrehgeber. Selbstverständlich können jedoch auch andere Ausgestaltungen realisiert werden.

Beispielsweise ist der Phasenwinkelgeber derart ausgebildet, dass er kein Signal ausgibt, wenn sich die elektrische Maschine in einem bestimmten Phasenwinkel beziehungsweise einem von mehreren Phasenwinkeln befindet. Außerhalb des Phasenwinkels beziehungsweise der Phasenwinkel gibt der Phasenwinkelgeber dagegen ein Signal aus. Liegt also ein Defekt des Phasenwinkelgebers und/oder einer Anschlussleitung, die den Phasenwinkelgeber mit einem Steuergerät der elektrischen Maschine verbindet, vor, so kann der Fall auftreten, dass stets kein Signal des Phasenwinkelgebers erkannt wird und insoweit beispielsweise durch das Steuergerät angenommen wird, dass der bestimmte Drehwinkel beziehungsweise einer der bestimmten Drehwinkel vorliegt.

Der konstante Rückgabewert des Phasenwinkelgebers kann jedoch neben einem Defekt auch andere Ursachen haben. Beispielsweise können der Phasenwinkelgeber und/oder seine Anschlussleitung defekt sein. Alternativ ist es auch möglich, dass die elektrische Maschine ein Drehmoment abgibt, dieses jedoch nicht ausreicht, um das Kraftfahrzeug zu bewegen. Dies ist beispielsweise der Fall, wenn das Kraftfahrzeug auf einer Steigung steht oder ein Hindernis vorliegt, beispielsweise ein Randstein, gegen welchen zumindest ein Rad des Kraftfahrzeugs stößt. Letzteres kann beispielsweise aufgrund eines Lenkanschlags auftreten, wenn das Kraftfahrzeug neben dem Randstein steht, also im Wesentlichen parallel zu diesem angeordnet ist.

Aus dem Stand der Technik ist die Druckschrift DE 10 2011 089 101 A1 bekannt. Diese offenbart ein Verfahren zum Erkennen eines Fehlers bei einem Antriebsstrang eines Fahrzeugs, welches die folgenden Schritte aufweist: Einprägen eines Drehmoments in den Antriebsstrang; Ermitteln eines zeitlichen Verlaufs eines Ist-Drehwinkels eines Teils des Antriebsstranges, wobei der Ist-Drehwinkel durch das eingeprägte Drehmoment verursacht wird; Vergleichen des zeitlichen Verlaufs des Ist-Drehwinkels mit einem vorgegebenen Referenzverlauf eines Drehwinkels; und Erkennen eines Fehlers beim Antriebsstrang basierend auf dem Ergebnis des Vergleichens des zeitlichen Verlaufs des Ist-Drehwinkels mit dem vorgegebenen Referenzverlauf.

Die Druckschrift DE 11 2011 104 614 T5 beschreibt dagegen ein Verfahren zum Schätzen eines Motordrehwinkels, das die Genauigkeit eines detektierten Winkels eines Kurbelwinkelsensors, der ein alternativer Sensor ist, nicht beeinflusst, wenn in einem Resolver und in einer Peripherieschaltung davon eine Anomalie auftritt. Das Verfahren dient weiterhin zum Ausführen einer Motorsteuerung, ohne einen Defekt eines Wechselrichters oder einer Peripherievorrichtung davon zu verursachen. Dazu enthält ein Fahrzeugsystem einen Motor zum Antreiben eines Fahrzeugs, einen Resolver, der einen Rotordrehwinkel des Motors detektiert, eine Motorsteuerschaltung, die den Motor auf der Grundlage von Informationen über den Rotordrehwinkel und einen Drehmomentbefehlswert steuert, eine Kraftmaschine, die über eine Kurbelwelle mit dem Motor verbunden ist, und einen Kurbelwellensensor, der die Anzahl von Umdrehungen der Kurbelwelle detektiert, wobei die Motorsteuerschaltung auf der Grundlage einer Änderungsrate der Anzahl der Umdrehungen der Kurbelwelle den Rotordrehwinkel schätzt und auf der Grundlage des geschätzten Rotordrehwinkels eine Schwachfeldsteuerung ausführt, wenn eine Anomalie des Resolvers detektiert wird.

Weiterhin ist aus der Druckschrift DE 10 2011 003 758 A1 ein Verfahren zur Resolverchipdiagnose mit den folgenden Schritten bekannt: Bereitstellen eines Resolverchip-Ausgangssignals, Bereitstellen einer Resolverchip-Ausgangsfrequenz und Diagnostizieren eines Resolverchipfehlers, basierend auf dem Resolverchip-Ausgangssignal und der Resolverchip-Ausgangsfrequenz.

Es ist nun Aufgabe der Erfindung, ein Verfahren zum Betreiben einer Antriebseinrichtung eines Kraftfahrzeugs vorzuschlagen, mittels welchem auf einfache Art und Weise eine Diagnose des Phasenwinkelgebers realisiert werden kann und welches zudem einfach und kostengünstig umsetzbar ist.

Dies wird erfindungsgemäß mit einem Verfahren mit den Merkmalen des Anspruchs 1 erreicht. Dabei ist vorgesehen, dass bei konstantem Rückgabewert des Phasenwinkelgebers eine erste Diagnosebetriebsart der Antriebseinrichtung durchgeführt wird, wobei die Wirkverbindung zwischen der elektrischen Maschine und der Abtriebswelle unterbrochen, anschließend die elektrische Maschine auf eine bestimmte Drehzahl geregelt und bei weiterhin konstantem Rückgabewert auf einen ersten Betriebszustand und ansonsten auf eine korrekte Funktion des Phasenwinkelgebers erkannt wird. Sobald der Rückgabewert des Phasenwinkelgebers konstant bleibt, insbesondere über einen bestimmten Zeitraum hinweg, welcher beispielsweise länger ist als ein Zeitraum, über welchen der Rückgabewert bei der kleinstmöglichen Drehzahl der elektrischen Maschine konstant bleibt, wird auf einen möglichen Defekt des Phasenwinkelgebers erkannt und die erste Diagnosebetriebsart eingeleitet.

Die erste Diagnosebetriebsart wird insbesondere dann durchgeführt, wenn der Rückgabewert des Phasenwinkelgebers konstant bleibt, obwohl die elektrische Maschine zum Erzeugen eines Drehmoments gesteuert und/oder geregelt betrieben wird. Beispielsweise wird an der elektrischen Maschine also ein von Null verschiedenes Sollmoment eingestellt. Wird dieses an der elektrischen Maschine eingestellt und bleibt der ermittelte Phasenwinkel dennoch konstant, so wird die Diagnose des Phasenwinkelgebers durchgeführt, insbesondere indem in die erste Diagnosebetriebsart gewechselt wird.

Zu Beginn der ersten Diagnosebetriebsart wird zunächst die Wirkverbindung zwischen der elektrischen Maschine und der Abtriebswelle unterbrochen. Nachfolgend wird eine Solldrehzahl der elektrischen Maschine auf die bestimmte Drehzahl eingestellt und anschließend die elektrische Maschine auf diese Solldrehzahl und mithin die bestehende Drehzahl geregelt. Das Regeln der elektrischen Maschine erfolgt dabei auf bekannte Art und Weise. Bleibt nun der Rückgabewert weiterhin konstant, insbesondere über den vorstehend beschriebenen Zeitraum, so wird auf einen ersten Betriebszustand des Phasenwinkelgebers beziehungsweise der Antriebseinrichtung erkannt. Ändert sich dagegen der Rückgabewert, so wird angenommen, dass der Phasenwinkelgeber korrekt arbeitet und somit auch seine korrekte Funktion erkannt. Liegt der erste Betriebszustand vor beziehungsweise wird auf diesen erkannt, weil der Rückgabewert weiterhin konstant bleibt, so kann entweder die Diagnose fortgesetzt werden oder alternativ bereits auf einen Defekt des Phasenwinkelgebers erkannt werden.

Eine weitere Ausgestaltung der Erfindung sieht vor, dass das Unterbrechen der Wirkverbindung mittels eines Schaltgetriebes, das in eine Neutralstellung gebracht wird, und/oder einer Schaltkupplung, die geöffnet wird, erfolgt. Die Wirkverbindung zwischen der elektrischen Maschine und der Abtriebswelle ist also über das Schaltgetriebe und/oder die Schaltkupplung hergestellt. Unter dem Schaltgetriebe ist ein Getriebe zu verstehen, welches das Einstellen mehrerer Gänge beziehungsweise Übersetzungen ermöglicht, beispielsweise mehrerer unterschiedlicher Fahrgänge. Auch ein Rückwärtsgang kann an dem Schaltgetriebe einstellbar sein. Zum Unterbrechen der Wirkverbindung wird das Schaltgetriebe in seine Neutralstellung gebracht, in welcher eine Eingangswelle von einer Ausgangswelle des Schaltgetriebes entkoppelt ist. Zusätzlich oder alternativ kann die Schaltkupplung herangezogen werden, um die Wirkverbindung zu unterbrechen. Die Schaltkupplung wird zu diesem Zweck geöffnet, insbesondere vollständig geöffnet, sodass ihre Eingangswelle vollständig von ihrer Ausgangswelle entkoppelt ist.

Eine bevorzugte Ausgestaltung der Erfindung sieht vor, dass die Antriebseinrichtung über ein Antriebsaggregat verfügt, das über eine Trennkupplung mit der elektrischen Maschine wirkverbindbar ist, wobei die Wirkverbindung bei Einleiten der ersten Diagnosebetriebsart mittels der Trennkupplung unterbrochen wird. Wie bereits einleitend ausgeführt, kann das Antriebsaggregat als Brennkraftmaschine vorliegen. Zwischen der elektrischen Maschine und dem Antriebsaggregat liegt die Trennkupplung vor, sodass die Wirkverbindung zwischen dem Antriebsaggregat und der elektrischen Maschine durch entsprechendes Einstellen der Trennkupplung unterbrechbar ist. Vorzugsweise ist das Antriebsaggregat bei geöffneter Trennkupplung vollständig von der elektrischen Maschine entkoppelt. Bevorzugt ist dies zusätzlich für die Abtriebswelle und das Schaltgetriebe der Fall. Bei geöffneter Trennkupplung ist also das Antriebsaggregat von weiteren Bereichen der Antriebseinrichtung und auch von der wenigstens einen Achse beziehungsweise dem wenigstens einen Rad des Kraftfahrzeugs vollständig entkoppelt.

Eine bevorzugte Ausgestaltung der Erfindung sieht vor, dass bei Erkennen auf den ersten Betriebszustand eine zweite Diagnosebetriebsart durchgeführt wird, wobei mittels eines Drehzahlsensors die Drehzahl einer mit der elektrischen Maschine permanent wirkverbundenen Welle bestimmt wird, wobei bei von Null verschiedener Drehzahl auf einen Defekt des Phasenwinkelgebers und ansonsten auf einen zweiten Betriebszustand erkannt wird. Wird also gemäß den vorstehenden Ausführungen auf den ersten Betriebszustand erkannt, so wird aus der ersten Diagnosebetriebsart die zweite Diagnosebetriebsart gewechselt beziehungsweise letztere eingeleitet. In dieser ist es vorgesehen, die Drehzahl der Welle mithilfe des Drehzahlsensors zu ermitteln. Weil die Welle permanent und vorzugsweise starr mit der elektrischen Maschine wirkverbunden ist, kann auf diese Art und Weise auch die Drehzahl der elektrischen Maschine ermittelt werden.

Der Drehzahlsensor ist beispielsweise dem Schaltgetriebe zugeordnet, insbesondere dessen Eingangswelle. Das bedeutet, dass auch bei Vorliegen des Schaltgetriebes in der Neutralstellung die Welle mit der elektrischen Maschine wirkverbunden ist. Die Welle entspricht beispielsweise der Eingangswelle des Schaltgetriebes. Ist die Drehzahl von Null verschieden, so kann auf den Defekt des Phasenwinkelgebers geschlossen werden, insbesondere wenn der Rückgabewert des Phasenwinkelgebers weiterhin und mithin gleichzeitig konstant ist. Ist die Drehzahl jedoch gleich Null und vorzugsweise der Rückgabewert des Phasenwinkelgebers gleichzeitig weiterhin konstant, so kann nicht eindeutig festgestellt werden, ob der Defekt vorliegt. Entsprechend wird auf den zweiten Betriebszustand erkannt. Es kann bereits vorgesehen sein, dass bei Erkennen auf den zweiten Betriebszustand ebenfalls auf den Defekt des Phasenwinkelgebers erkannt wird. Bevorzugt wird jedoch die Diagnose des Phasenwinkelgebers fortgesetzt.

Besonders bevorzugt ist es gemäß einer Ausgestaltung der Erfindung vorgesehen, dass bei Erkennen auf den zweiten Betriebszustand eine dritte Diagnosebetriebsart durchgeführt wird, in welcher die elektrische Maschine auf die bestimmte Drehzahl gesteuert oder geregelt wird, wobei das Regeln ein Vorsteuern auf die bestimmte Drehzahl umfasst. Zur Fortsetzung der Diagnose bei dem Erkennen auf den zweiten Betriebszustand wird die dritte Diagnosebetriebsart herangezogen. Entsprechend wird in diesem Fall aus der zweiten Diagnosebetriebsart in die dritte Diagnosebetriebsart gewechselt beziehungsweise letztere eingeleitet. In der dritten Diagnosebetriebsart wird die Solldrehzahl der elektrischen Maschine auf die bestimmte Drehzahl eingestellt. Anschließend wird sie auf diese Solldrehzahl gesteuert oder unter Verwendung einer Vorsteuerung geregelt. Das Ansteuern in der elektrischen Maschine beziehungsweise das Regeln mithilfe der Vorsteuerung erfolgt ohne den Rückgabewert des Phasenwinkelgebers. Der Phasenwinkelgeber wird insoweit in der dritten Diagnosebetriebsart nicht zum Ansteuern der elektrischen Maschine herangezogen.

Beispielsweise ist es in einer weiteren Ausgestaltung der Erfindung vorgesehen, dass bei weiterhin konstantem Rückgabewert in der dritten Diagnosebetriebsart auf einen dritten Betriebszustand und ansonsten auf eine korrekte Funktion des Phasenwinkelgebers erkannt wird. Bleibt der Rückgabewert weiterhin konstant, so kann erneut nicht eindeutig auf den Defekt des Phasenwinkelgebers geschlossen werden. Entsprechend wird auf den dritten Betriebszustand erkannt. Ändert sich dagegen der Rückgabewert, so wird auf die ordnungsgemäße Funktion des Phasenwinkelgebers geschlossen. Wird auf den dritten Betriebszustand erkannt, so kann es vorgesehen sein, dass bereits der Fehler des Phasenwinkelgebers festgestellt wird. Vorzugsweise wird die Diagnose jedoch fortgeführt.

Eine weitere Ausgestaltung der Erfindung sieht vor, dass bei Erkennen auf den dritten Betriebszustand eine vierte Diagnosebetriebsart durchgeführt wird, in welcher mittels des Drehzahlsensors die Drehzahl der mit der elektrischen Maschine permanent wirkverbundenen Welle bestimmt wird, wobei bei von Null verschiedener Drehzahl auf einen Defekt des Phasenwinkelgebers erkannt wird. In der vierten Diagnosebetriebsart wird also erneut der Drehzahlsensor herangezogen, um die Drehzahl der Welle und mithin die Drehzahl der elektrischen Maschine zu ermitteln. In der vierten Diagnosebetriebsart wird weiterhin das bereits vorstehend für die dritte Diagnosebetriebsart erläuterte Steuern oder Regeln der elektrischen Maschine auf die bestimmte Drehzahl vorgenommen. In der vierten Diagnosebetriebsart wird analog zu der zweiten Diagnosebetriebsart auf den Fehler des Phasenwinkelgebers erkannt, sobald die Drehzahl von Null verschieden ist und insbesondere der Rückgabewert des Phasenwinkelgebers weiterhin konstant ist. Ist dagegen die Drehzahl gleich Null, bei weiterhin konstantem Rückgabewert des Phasenwinkelgebers, so kann nicht eindeutig auf den Defekt des Phasenwinkelgebers geschlossen werden. Entsprechend kann beispielsweise von einer normalen Funktion ausgegangen werden.

Eine weitere bevorzugte Ausgestaltung der Erfindung sieht vor, dass aus der vierten Diagnosebetriebsart in die erste Diagnosebetriebsart gewechselt wird, insbesondere nach einer bestimmten Zeitspanne, falls die Drehzahl in der vierten Betriebsart gleich Null ist. Wie bereits vorstehend erläutert, kann in der vierten Diagnosebetriebsart nicht eindeutig auf den Defekt des Phasenwinkelgebers erkannt werden, falls die Drehzahl gleich Null ist und der Rückgabewert weiterhin konstant ist. Entsprechend kann es vorgesehen sein, dass vorstehend beschriebene Verfahren zu wiederholen, um möglicherweise bei einem neuerlichen Durchlauf zu einem eindeutigen Ergebnis zu kommen. Zu diesem Zweck wird aus der vierten Diagnosebetriebsart in die erste Diagnosebetriebsart gewechselt, falls die genannte Bedingung zutrifft. Dabei kann es vorgesehen sein, zunächst eine bestimmte Zeitspanne abzuwarten, sodass nicht unmittelbar nach dem Bestimmen der Drehzahl der Welle und dem darauffolgenden Vergleich wieder in die erste Diagnosebetriebsart zurückgewechselt wird.

Schließlich kann es vorgesehen sein, dass bei Erkennen auf den ersten Betriebszustand, den zweiten Betriebszustand oder den dritten Betriebszustand auf einen Defekt des Phasenwinkelgebers erkannt wird. Es wurde bereits darauf eingegangen, dass es grundsätzlich vorteilhaft sein kann, die Diagnose nach dem Erkennen des jeweiligen Betriebszustandes fortzuführen. Um das Verfahren jedoch möglichst einfach zu halten, kann es auch vorgesehen sein, dass bereits bei Erkennen des entsprechenden Betriebszustands auf den Defekt des Phasenwinkelgebers erkannt wird.

Die Erfindung betrifft weiterhin eine Antriebseinrichtung eines Kraftfahrzeugs, insbesondere zur Durchführung des Verfahrens gemäß den vorstehenden Ausführungen, wobei die Antriebseinrichtung wenigstens eine elektrische Maschine mit einem Phasenwinkelgeber sowie eine mit der elektrischen Maschine wirkverbindbare Abtriebswelle aufweist. Dabei ist vorgesehen, dass die Antriebseinrichtung dazu ausgebildet ist, bei konstantem Rückgabewert des Phasenwinkelgebers eine erste Diagnosebetriebsart der Antriebseinrichtung durchzuführen, wobei die Wirkverbindung zwischen der elektrischen Maschine und der Abtriebswelle unterbrochen, anschließend die elektrische Maschine auf eine bestimmte Drehzahl geregelt und bei weiterhin konstantem Rückgabewert auf einen ersten Betriebszustand und ansonsten auf eine korrekte Funktion des Phasenwinkelgebers erkannt wird. Auf die Vorteile einer derartigen Ausgestaltung der Antriebseinrichtung sowie des Verfahrens wurde bereits eingegangen. Sowohl die Antriebseinrichtung als auch das Verfahren können gemäß den vorstehenden Ausführungen weitergebildet sein, sodass insoweit auf diese verwiesen wird.

Die Erfindung wird nachfolgend anhand der in der Zeichnung dargestellten Ausführungsformen näher erläutert, ohne dass eine Beschränkung der Erfindung erfolgt. Dabei zeigt die einzige Figur.

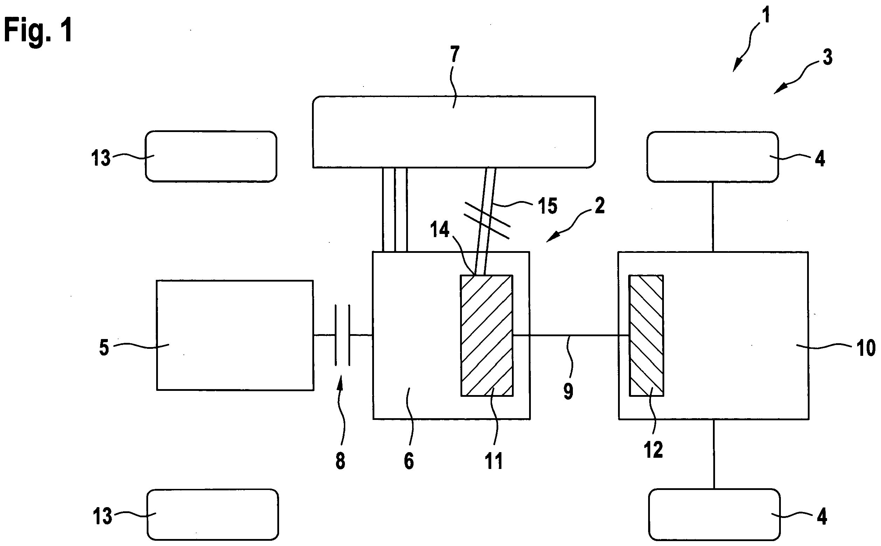

Fig. 1 eine schematische Darstellung eines Kraftfahrzeugs mit einer Antriebseinrichtung.

Die Fig. 1 zeigt eine schematische Darstellung eines Kraftfahrzeugs 1, das über eine Antriebseinrichtung 2 sowie mindestens eine angetriebene Achse 3 mit Rädern 4 aufweist. Die Achse 3 ist dabei mittels der Antriebseinrichtung 2 antreibbar. Die Antriebseinrichtung 2 weist ein Antriebsaggregat 5 auf, welches beispielsweise als Brennkraftmaschine vorliegt. Zudem ist eine elektrische Maschine 6 vorgesehen, die mittels eines Steuergerätes 7 ansteuerbar ist. Das Antriebsaggregat 5 ist über eine Trennkupplung 8 mit der elektrischen Maschine 6 wirkverbindbar. Die elektrische Maschine 6 ihrerseits ist beispielsweise mit einer Eingangswelle 9 eines Schaltgetriebes 10 permanent und vorzugsweise starr wirkverbunden. Über das Schaltgetriebe 10 ist die elektrische Maschine 6 mit einer hier nicht dargestellten Abtriebswelle der Antriebseinrichtung 2 wirkverbindbar beziehungsweise wirkverbunden. Die Abtriebswelle liegt beispielsweise als Ausgangswelle des Schaltgetriebes 10 vor und ist bevorzugt permanent und starr mit der Achse 3 beziehungsweise dem wenigstens einen Rad 4 der Achse 3 wirkverbunden.

Die elektrische Maschine 6 weist einen Phasenwinkelgeber 11 auf, der an das Steuergerät 7 angeschlossen ist. Dem Schaltgetriebe 10 ist vorzugsweise ein Drehzahlsensor 12 zugeordnet, welcher zum Bestimmen der Drehzahl der Eingangswelle 9 des Schaltgetriebes 10 dient. Mithilfe des Drehzahlsensors 12 kann entsprechend auch die Drehzahl der elektrischen Maschine 6 ermittelt werden. Das Schaltgetriebe 10 ist derart ausgestaltet, dass mehrere unterschiedliche Übersetzungen zwischen der Eingangswelle 9 und der Ausgangswelle beziehungsweise der Abtriebswelle einstellbar sind. Zudem weist das Schaltgetriebe 10 eine Neutralstellung auf, in welcher die Wirkverbindung zwischen der Eingangswelle 9 und der Ausgangswelle beziehungsweise der Abtriebswelle vollständig unterbrochen ist. In der Neutralstellung des Schaltgetriebes 10 ist also die elektrische Maschine 6 vollständig von der Achse 3 beziehungsweise den Rädern 4 entkoppelt. Alternativ oder zusätzlich kann für dieses Entkoppeln jedoch eine hier nicht dargestellte Trennkupplung vorgesehen sein.

Das Kraftfahrzeug 1 kann selbstverständlich neben den Rädern 4 der angetriebenen Achse 3 über nicht angetriebene Räder 13 verfügen. Alternative sind die Räder 13 ebenfalls einer angetriebenen Achse zugeordnet. Vorzugsweise ist in diesem Fall die angetriebene Achse der Räder 13 ebenfalls mit der Abtriebswelle der Antriebseinrichtung 2 wirkverbunden, beispielsweise permanent und starr.

Zum geregelten Ansteuern der elektrischen Maschine 6 muss der momentane Phasenwinkel des Rotors beziehungsweise einer Motorwelle der elektrischen Maschine 6 möglichst genau bekannt sein. Zum Bestimmen dieses Phasenwinkels ist der Phasenwinkelgeber 11 vorgesehen, welcher beispielsweise inkrementell arbeitet. Vorzugsweise liegt an einem Ausgang 14 des Phasenwinkelgebers 11 bei einem bestimmten Phasenwinkel beziehungsweise bei einem von mehreren bestimmten Phasenwinkeln kein Signal an, während dies außerhalb des Phasenwinkels beziehungsweise der Phasenwinkel der Fall ist. Selbstverständlich kann auch der umgekehrte Fall vorgesehen sein, dass nämlich bei Vorliegen des Phasenwinkels beziehungsweise eines der Phasenwinkel das Signal vorliegt, während dies außerhalb nicht vorgesehen ist.

Bleibt nun der Rückgabewert des Phasenwinkelgebers 11 konstant, insbesondere über einen bestimmten Zeitraum, so kann dies darin begründet sein, dass die elektrische Maschine 6 sich trotz Ansteuerung zum Erzeugen eines Drehmoments nicht dreht. Es kann jedoch ebenfalls der Fall auftreten, dass der Phasenwinkelgeber 11 und/oder seine Anschlussleitung 15 an das Steuergerät 7 defekt ist/sind. Das bedeutet, dass es bei Auftreten dieses Zustands wünschenswert ist, eine Diagnose durchzuführen, um festzustellen, ob ein Defekt vorliegt oder lediglich die Antriebseinrichtung 2 beziehungsweise das Kraftfahrzeug 1 festgesetzt ist. Zur Durchführung der Diagnose wird auf die vorstehenden Ausführungen verwiesen.

Unter Verwendung der beschriebenen Antriebseinrichtung 2 und/oder des eingangs erläuterten Verfahrens kann mit einfachen und kostengünstigen Mitteln schnell auf einen Defekt des Phasenwinkelgebers 11 geschlossen werden. Umständliche Umrüstmaßnahmen oder zusätzliche Sensoren sind nicht notwendig.

## Patentansprüche

1. Verfahren zum Betreiben einer Antriebseinrichtung (2) eines Kraftfahrzeugs (1), die wenigstens eine elektrische Maschine (6) mit einem Phasenwinkelgeber (11) sowie eine mit der elektrischen Maschine (6) wirkverbindbare Abtriebswelle aufweist, **dadurch gekennzeichnet, dass** bei konstantem Rückgabewert des Phasenwinkelgebers (11) eine erste Diagnosebetriebsart der Antriebseinrichtung (2) durchgeführt wird, wobei die Wirkverbindung zwischen der elektrischen Maschine (6) und der Abtriebswelle unterbrochen, anschließend die elektrische Maschine (6) auf eine bestimmte Drehzahl geregelt und bei weiterhin konstantem Rückgabewert auf einen ersten Betriebszustand und ansonsten auf eine korrekte Funktion des Phasenwinkelgebers (11) erkannt wird.

2. Verfahren nach Anspruch 1, **dadurch gekennzeichnet, dass** das Unterbrechen der Wirkverbindung mittels eines Schaltgetriebes (10), das in eine Neutralstellung gebracht wird und/oder einer Schaltkupplung, die geöffnet wird, erfolgt.

3. Verfahren nach einem der vorhergehenden Ansprüche, **dadurch gekennzeichnet, dass** die Antriebseinrichtung (2) über ein Antriebsaggregat (5) verfügt, das über eine Trennkupplung (8) mit der elektrischen Maschine (6) wirkverbindbar ist, wobei die Wirkverbindung bei Einleiten der ersten Diagnosebetriebsart mittels der Trennkupplung (8) unterbrochen wird.

4. Verfahren nach einem der vorhergehenden Ansprüche, **dadurch gekennzeichnet, dass** bei Erkennen auf den ersten Betriebszustand eine zweite Diagnosebetriebsart durchgeführt wird, wobei mittels eines Drehzahlsensors (12) die Drehzahl einer mit der elektrischen Maschine (6) permanent wirkverbundenen Welle (9) bestimmt wird, wobei bei von Null verschiedener Drehzahl auf einen Defekt des Phasenwinkelgebers (11) und ansonsten auf einen zweiten Betriebszustand erkannt wird.

5. Verfahren nach Anspruch 4, **dadurch gekennzeichnet, dass** bei Erkennen auf den zweiten Betriebszustand eine dritte Diagnosebetriebsart durchgeführt wird, in welcher die elektrische Maschine (6) auf die bestimmte Drehzahl gesteuert oder geregelt wird, wobei das Regeln ein Vorsteuern auf die bestimmte Drehzahl umfasst.

6. Verfahren nach Anspruch 5, **dadurch gekennzeichnet, dass** bei weiterhin konstantem Rückgabewert in der dritten Diagnosebetriebsart auf einen dritten Betriebszustand und ansonsten auf eine korrekte Funktion des Phasenwinkelgebers (11) erkannt wird.

7. Verfahren nach Anspruch 6, **dadurch gekennzeichnet, dass** bei Erkennen auf den dritten Betriebszustand eine vierte Diagnosebetriebsart durchgeführt wird, in welcher mittels des Drehzahlsensors (12) die Drehzahl der mit der elektrischen Maschine (6) permanent wirkverbundenen Welle (9) bestimmt wird, wobei bei von Null verschiedener Drehzahl auf einen Defekt des Phasenwinkelgebers (11) erkannt wird.

8. Verfahren nach Anspruch 7, **dadurch gekennzeichnet, dass** aus der vierten Diagnosebetriebsart in die erste Diagnosebetriebsart gewechselt wird, insbesondere nach einer bestimmten Zeitspanne, falls die Drehzahl in der vierten Betriebsart gleich Null ist.

9. Verfahren nach einem der vorhergehenden Ansprüche, **dadurch gekennzeichnet, dass** bei Erkennen auf den ersten Betriebszustand, den zweiten Betriebszustand oder den dritten Betriebszustand auf einen Defekt des Phasenwinkelgebers (11) erkannt wird.

10. Antriebseinrichtung (2) eines Kraftfahrzeugs (1) ausgebildet zur Durchführung des Verfahrens nach einem oder mehreren der vorhergehenden Ansprüche.

## Claims

1. Method for operating a drive device (2) of a motor vehicle (1), which has at least one electrical machine (6) having a phase angle transmitter (11) as well as a drive shaft able to be operatively connected to the electrical machine (6), **characterised in that,** in the case of a constant return value of the phase angle transmitter (11), a first diagnosis operating mode of the drive device (2) is executed, wherein the operative connection between the electrical machine (6) and the drive shaft is interrupted, subsequently the electrical machine (6) is regulated to a determined rotational speed and, in the case of a continued constant return value, a first operating state is detected, and otherwise a correct function of the phase angle transmitter (11).

2. Method according to claim 1, **characterised in that** the interruption of the operative connection occurs by means of a gearbox (10) which is brought into a neutral position and/or a clutch coupling which is opened.

3. Method according to any one of the preceding claims, **characterised in that** the drive device (2) has a drive unit (5) which is operatively connected to the electrical machine (6) via a separating clutch (8), wherein the operative connection is interrupted by means of the separating clutch (8) in the case of initiation of the first diagnosis operating mode.

4. Method according to any one of the preceding claims, **characterised in that,** in the case of detecting the first operating state, a second diagnosis operating mode is executed, wherein the rotational speed of a shaft (9) permanently operatively connected to the electrical machine (6) is determined by means of a rotational speed sensor (12), wherein, in the case of a rotational speed different to zero, a defect of the phase angle transmitter (11) is detected, and otherwise a second operating state.

5. Method according to claim 4, **characterised in that,** in the case of detecting the second operating state, a third diagnosis operating mode is executed, in which the electrical machine (6) is controlled or regulated to the determined rotational speed, wherein the regulation comprises a pre-control to the determined rotational speed.

6. Method according to claim 5, **characterised in that,** in the case of a continued constant return value in the third diagnosis operating mode, a third operating state is detected, and otherwise a correct function of the phase angle transmitter (11).

7. Method according to claim 6, **characterised in that,** in the case of detecting the third operating state, a fourth diagnosis operating mode is executed in which the rotational speed of the shaft (9) permanently operatively connected to the electrical machine (6) is determined by means of the rotational speed sensor (12), wherein, in the case of a rotational speed different to zero, a defect of the phase angle transmitter (11) is detected.

8. Method according to claim 7, **characterised in that** it is switched from the fourth diagnosis operating mode into the first diagnosis operating mode, in particular after a certain time span, if the rotational speed in the fourth operating mode is equal to zero.

9. Method according to any one of the preceding claims, **characterised in that,** in the case of detecting the first operating state, the second operating state or the third operating state, a defect of the phase angle transmitter (11) is detected.

10. Drive device (2) of a motor vehicle (1), formed for executing the method according to one or more of the preceding claims.

## Revendications

1. Procédé de fonctionnement d'un dispositif de propulsion (2) d'un véhicule automobile (1), qui présente au moins un moteur électrique (6) avec un indicateur d'angle de phase (11) ainsi qu'un arbre de sortie lié activement au moteur électrique (6), **caractérisé en ce que,** à une valeur de renvoi constante de l'indicateur d'angle de phase (11), on effectue un premier mode de service de diagnostic du dispositif de propulsion (2), dans lequel la liaison active est interrompue entre le moteur électrique (6) et l'arbre de sortie, puis le moteur électrique (6) est réglé à un nombre de tours déterminé et, à une valeur de renvoi encore constante, est identifié à un premier état de fonctionnement et sinon à une fonction correcte de l'indicateur d'angle de phase (11).

2. Procédé selon la revendication 1, **caractérisé en ce que** l'interruption de la liaison active se fait au moyen d'un mécanisme de manoeuvre (10) qui est amené en position neutre et/ou d'un embrayage qui est ouvert.

3. Procédé selon l'une quelconque des revendications précédentes, **caractérisé en ce que** le dispositif de propulsion (2) dispose d'un groupe d'entraînement (5) qui peut se lier activement au moteur électrique (6) via un couplage séparateur (8), dans lequel la liaison active est interrompue au moyen du couplage séparateur (8) lors du déclenchement du premier mode de service de diagnostic.

4. Procédé selon l'une quelconque des revendications précédentes, **caractérisé en ce que,** lors de l'identification du premier état de fonctionnement, on effectue un deuxième mode de service de diagnostic, dans lequel on détermine au moyen d'un capteur de nombre de tours (12) le nombre de tours d'un arbre (9) lié activement en permanence au moteur électrique (6), dans lequel, lors d'un nombre de tours différent de zéro, on identifie un défaut de l'indicateur d'angle de phase (11) et sinon un second état de fonctionnement.

5. Procédé selon la revendication 4, **caractérisé en ce que,** lors de l'identification du second état de fonctionnement, on réalise un troisième mode de service de diagnostic dans lequel le moteur électrique (6) est commandé ou réglé au nombre de tours déterminé, dans lequel le réglage comprend une précommande au nombre de tours déterminé.

6. Procédé selon la revendication 5, **caractérisé en ce que,** à une valeur de renvoi encore constante dans le troisième mode de service de diagnostic, on identifie un troisième état de fonctionnement et sinon une fonction correcte de l'indicateur d'angle de phase (11).

7. Procédé selon la revendication 6, **caractérisé en ce que,** lors de l'identification du troisième état de fonctionnement, on réalise un quatrième mode de service de diagnostic, dans lequel on détermine au moyen du capteur de nombre de tours (12) le nombre de tours de l'arbre (9) lié activement en permanence au moteur électrique (6), dans lequel, lors d'un nombre de tours différent de zéro, on identifie un défaut de l'indicateur d'angle de phase (11).

8. Procédé selon la revendication 7, **caractérisé en ce que** l'on passe du quatrième mode de service de diagnostic au premier mode de service de diagnostic, en particulier après un intervalle de temps déterminé au cas où le nombre de tours dans le quatrième type de fonctionnement est égal à zéro.

9. Procédé selon l'une quelconque des revendications précédentes, **caractérisé en ce que,** lors de l'identification du premier état de fonctionnement, du deuxième état de fonctionnement ou du troisième état de fonctionnement, on identifie un défaut de l'indicateur d'angle de phase (11).

10. Dispositif de propulsion (2) d'un véhicule automobile (1) conçu pour réaliser le procédé selon une ou plusieurs des revendications précédentes.
